# EUROPEAN PATENT APPLICATION

(11) **EP 4 057 198 A1**
(43) Date of publication of application: **14.09.2022**
(21) Application number: 22155670.7
(22) Date of filing: 08.02.2022
(51) Int. Cl.: G06Q 10/08, G06Q 50/28, G06K 7/14

(54) **PRODUCT MANAGEMENT SYSTEM, PRODUCT MANAGEMENT METHOD, AND PRODUCT MANAGEMENT PROGRAM**

(30) Priority: 09.03.2021 JP 2021037400
(71) Applicant: OMRON Corporation, Shiokoji-dori, Shimogyo-Ku Kyoto-shi Kyoto 600-8530 (JP)
(72) Inventor: TERAMOTO, Eiji, Tokyo, 108-0075 (JP)
(74) Representative: Horn Kleimann Waitzhofer Patentanwälte PartG mbB

(57) **Abstract**

Provided is a product management system, a product management method, and a product management program that make it possible to check whether displayed prices of products are correct or not in a short time. A product management system 10 includes: an acquisition processing unit 113 that acquires displayed prices of a plurality of products and identification information of a product group including the products from a camera 27 that reads a two-dimensional code Cr corresponding to the product group and provided at a predetermined position on a product shelf, and acquires registered prices of the products associated with the identification information of the product group; and a notification processing unit 115 that outputs predetermined information if a displayed price of at least one of the products acquired by the acquisition processing unit 113 does not match the corresponding registered price of the product acquired by the acquisition processing unit 113.

## Description

### CROSS-REFERENCES TO RELATED APPLICATIONS

This application claims priority to Japanese Patent Application No. 2021-037400 filed March 9, 2021, the entire contents of which are incorporated herein by reference.

### FIELD

The present invention relates to a product management system, a product management method, and a product management program for managing products in a facility.

### BACKGROUND

In facilities such as retail stores, prices of products to be sold to customers are sometimes set to be lower than regular prices. For example, there are cases where the selling price of a specific product is set to a discount price that is half (50% OFF) the regular price during a specific period. In such a case, a clerk attaches a price tag of the discount price to the product or a product shelf. There may be cases where the clerk forgets to replace the price tag of the discount price with a price tag of the regular price when the specific period has ended. In such a case, a customer who intends to buy the specific product at the discount price is charged the regular price when making payment, and this may cause trouble.

As a technology that can solve the above problem, a system has been proposed in which images of price tags of products in a product shelf are captured by a robot that moves around in a store, and prices (displayed prices) are checked based on the captured images (see JP 2020-198054A, for example).

JP 2020-198054A is an example of background art.

### SUMMARY

However, in conventional technologies, it is necessary to capture images of price tags of products displayed in a product shelf one by one to check prices, and there is a problem in that the work takes a long time.

An object of the present invention is to provide a product management system, a product management method, and a product management program that make it possible to check whether displayed prices of products are correct or not in a short time.

A product management system according to an aspect of the present invention includes: a first acquisition processing unit configured to acquire displayed prices of a plurality of products and identification information of a product group that includes the plurality of products from a reading unit that reads an information-readable medium that corresponds to the product group and is provided at a predetermined position on a product shelf; a second acquisition processing unit configured to acquire registered prices of the plurality of products associated with the identification information of the product group acquired by the first acquisition processing unit; and a notification processing unit configured to output predetermined information if a displayed price of at least one of the plurality of products acquired by the first acquisition processing unit does not match the corresponding registered price of the product acquired by the second acquisition processing unit.

With this configuration, the product management system can acquire currently displayed prices of the plurality of products included in the product group corresponding to the information-readable medium by reading the single information-readable medium (e.g., a two-dimensional code) attached to the product shelf. Also, the product management system can acquire correct selling prices (registered prices) associated with the plurality of products, based on the product group. Then, the product management system can determine whether the displayed prices are correct or not by comparing the displayed prices with the registered prices. As described above, it is possible to collectively check displayed prices of a plurality of products included in a predetermined range, and therefore, whether the displayed prices of the products are correct or not can be checked in a short time.

The product management system may be configured such that the product group includes products that are respectively arranged from bottom to top rows in a column extending in the vertical direction of the product shelf, and the information-readable medium includes the identification information of the product group and currently displayed prices of the plurality of products included in the product group.

This configuration makes it possible to collectively acquire displayed prices of the products respectively arranged from the bottom to top rows in a column extending in the vertical direction of the product shelf by reading the information-readable medium.

The product management system may be configured such that, in a case where a selling price of a specific product included in the product group is set to a special price that is different from a regular price, the information-readable medium further includes information of an applicable period during which the special price is applicable.

This configuration makes it possible to determine whether the applicable period of the special price of the specific period has elapsed or not by reading the information-readable medium.

The product management system may further include an output processing unit configured to output a display medium that includes a set of the information-readable medium and a price tag of a displayed price of at least one product included in the product group.

This configuration enables a clerk to change the displayed price of the specific product and the information-readable medium at the same time, for example. Therefore, it is possible to prevent a mistake of changing only the displayed price of the specific product and forgetting to change the information-readable medium.

The product management system may further include a mobile device that autonomously moves in a predetermined area, and, in the mobile device, the reading unit may be provided at a position at which the reading unit is able to read the information-readable medium.

This configuration enables the mobile device to read the information-readable medium while autonomously moving.

The product management system may be configured such that a plurality of the information-readable mediums are respectively provided for columns in the product shelf, and the plurality of information-readable mediums are provided at the same height from a floor. Also, in the product management system, the reading unit of the mobile device may sequentially read the information-readable mediums respectively provided for the columns in the product shelf while the mobile device is moving in front of the product shelf.

This enables the mobile device to read the plurality of information-readable mediums quickly while moving autonomously.

The product management system may be configured such that the notification processing unit outputs information that urges replacement of the displayed price with the registered price with respect to the product of which the displayed price does not match the registered price.

This configuration makes it possible to inform a clerk that the displayed price is incorrect, for example, and accordingly, the clerk can immediately change the displayed price.

A product management method according to another aspect of the present invention is a method that is executed by one or more processors and includes: a first acquisition step of acquiring displayed prices of a plurality of products and identification information of a product group that includes the plurality of products from a reading unit that reads an information-readable medium that corresponds to the product group and is provided at a predetermined position on a product shelf; a second acquisition step of acquiring registered prices of the plurality of products associated with the identification information of the product group acquired in the first acquisition step; and a notification step of outputting predetermined information if a displayed price of at least one of the plurality of products acquired in the first acquisition step does not match the corresponding registered price of the product acquired in the second acquisition step.

A product management program according to another aspect of the present invention is a program for causing one or more processors to execute: a first acquisition step of acquiring displayed prices of a plurality of products and identification information of a product group that includes the plurality of products from a reading unit that reads an information-readable medium that corresponds to the product group and is provided at a predetermined position on a product shelf; a second acquisition step of acquiring registered prices of the plurality of products associated with the identification information of the product group acquired in the first acquisition step; and a notification step of outputting predetermined information if a displayed price of at least one of the plurality of products acquired in the first acquisition step does not match the corresponding registered price of the product acquired in the second acquisition step.

According to the present invention, whether displayed prices of products are correct or not can be checked in a short time.

### BRIEF DESCRIPTION OF THE DRAWINGS

FIG. 1 is a block diagram showing a configuration of a product management system according to an embodiment of the present invention.
FIG. 2 is a schematic diagram showing an example of a facility in which the product management system according to the embodiment of the present invention is introduced.
FIG. 3 is a perspective view showing an external appearance of a mobile robot according to the embodiment of the present invention.
FIG. 4 is a perspective view showing an external appearance of a product shelf according to the embodiment of the present invention.
FIG. 5 is a diagram showing an example of product information that is used in the product management system according to the embodiment of the present invention.
FIG. 6 is a diagram showing an example of product group information that is used in the product management system according to the embodiment of the present invention.
FIG. 7 is a diagram showing an example of product groups that are set in the product management system according to the embodiment of the present invention.
FIG. 8 is a diagram showing an example of display mediums that are output in the product management system according to the embodiment of the present invention.
FIG. 9 is a diagram showing an example of product information that is used in the product management system according to the embodiment of the present invention.
FIG. 10 is a diagram showing an example of display mediums output in the product management system according to the embodiment of the present invention.
FIG. 11 is a diagram for explaining a work for checking displayed prices on a product shelf according to the embodiment of the present invention.
FIG. 12 is a diagram showing an example of a notification screen that is displayed in the product management system according to the embodiment of the present invention.
FIG. 13 is a flowchart showing an example of a procedure of product management processing executed in the product management system according to the embodiment of the present invention.
FIG. 14 is a diagram showing an example of a two-dimensional code that is attached to a product shelf according to another embodiment of the present invention.
FIG. 15 is a diagram showing an example of a travel route of the mobile robot according to the other embodiment of the present invention.
FIG. 16 is a diagram showing an example of product groups that are set in a product management system according to another embodiment of the present invention.

### DETAILED DESCRIPTION

The following describes an embodiment of the present invention with reference to the accompanying drawings. Note that the following embodiment is an example embodiment of the present invention and does not limit the technical scope of the present invention.

### Product Management System 10

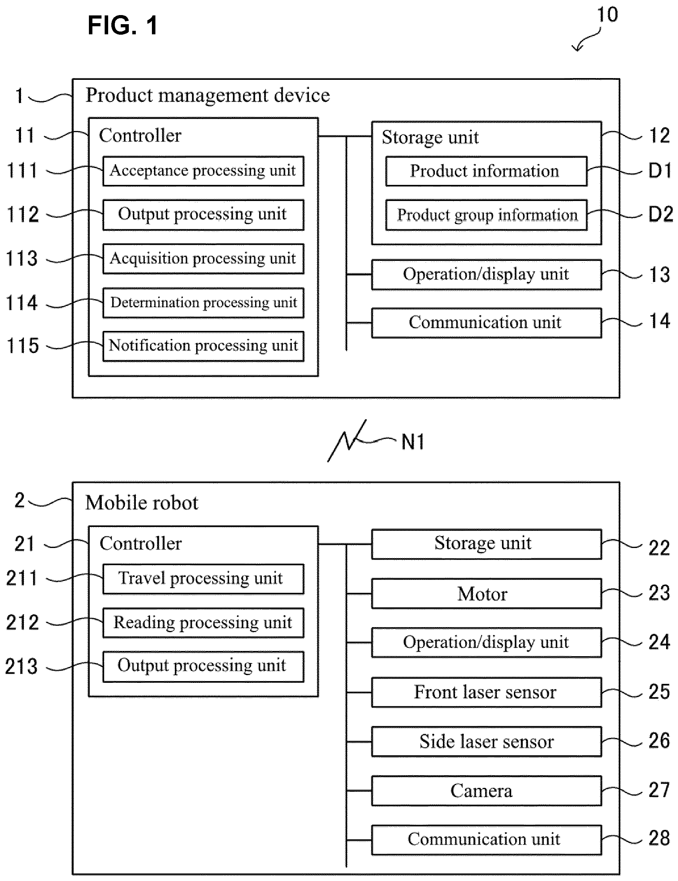

As shown in FIG. 1, a product management system 10 according to the embodiment of the present invention includes a product management device 1 and a mobile robot 2. The product management device 1 and the mobile robot 2 can communicate with each other via a communication network N1 such as the Internet, a LAN, a WAN, or a public telephone line. The mobile robot 2 is an example of a mobile device in the present invention.

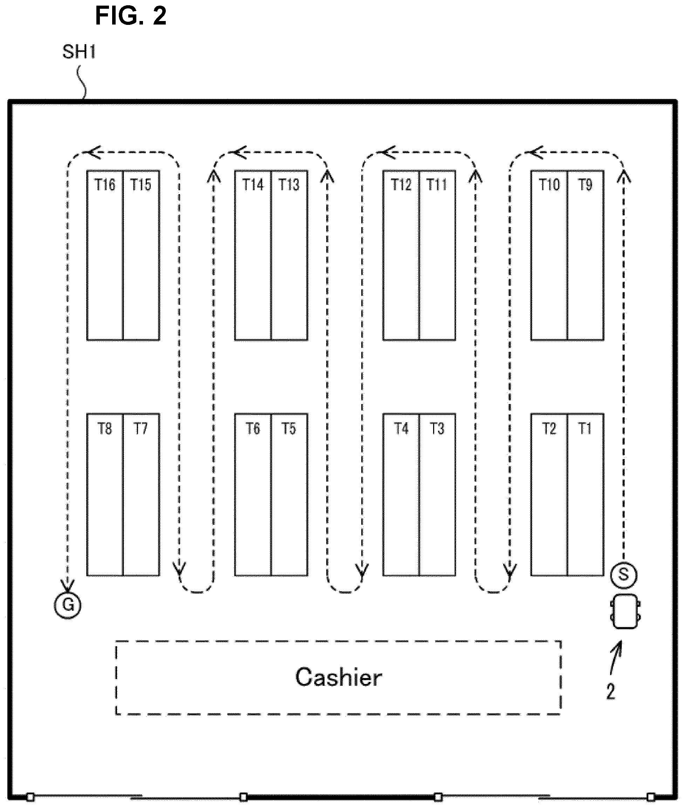

The product management system 10 is introduced into a facility (retail store) such as a shopping mall, a supermarket, or a convenience store, in which products are sold. The mobile robot 2 moves (autonomously) in the facility by autonomously traveling between a plurality of product shelves. For example, as shown in FIG. 2, the mobile robot 2 moves autonomously in a facility SH1 along a travel route that is set in advance and extends along product shelves T1 to T16 from a start position S to an end position G.

The mobile robot 2 sequentially acquires information of displayed prices (selling prices) of products that are displayed on the product shelves while autonomously moving along the travel route. The product management device 1 manages prices, shelf positions (display locations), inventory, sales, and the like of products that are sold in the facility. Also, the product management device 1 checks whether the displayed prices of the products are correct or not based on information that is acquired from the mobile robot 2.

One or more mobile robots 2 may be provided in the facility. The product management device 1 may be installed inside or outside the facility.

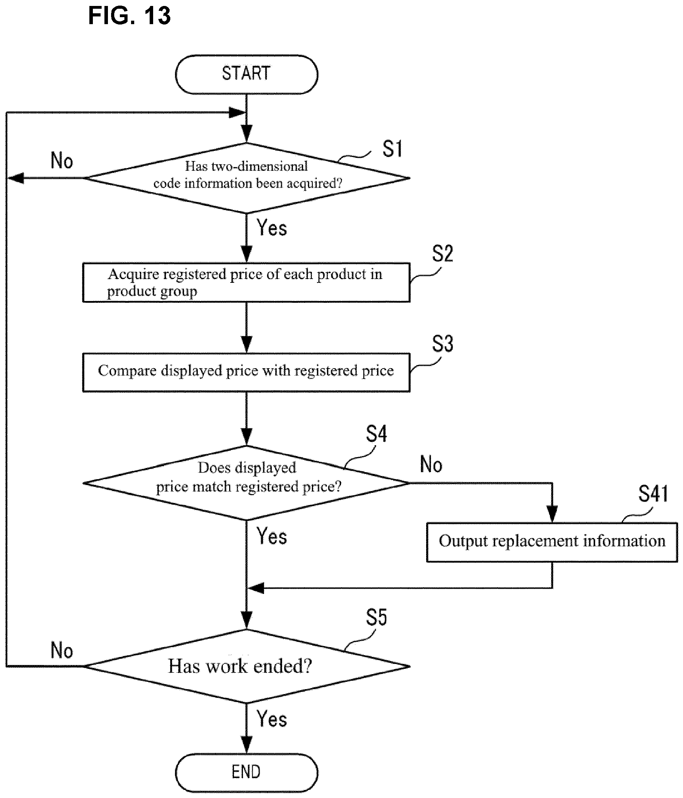

In the present embodiment, the single product management device 1 corresponds to a product management system according to the present invention, but the product management system according to the present invention may include one or more constitutional elements of the product management device 1 and the mobile robot 2. For example, in a case where various steps of product management processing (see FIG. 13), which will be described later, are allotted to constitutional elements of the product management device 1 and the mobile robot 2 and are executed by the constitutional elements cooperating with each other, a system that includes the plurality of constitutional elements that execute the processing can be taken to be the product management system according to the present invention. For example, the product management device 1 and the mobile robot 2 may constitute the product management system according to the present invention. Note that the mobile device in the present invention is not limited to a mobile robot that moves autonomously, and may be a mobile body that moves on a travel rail that is installed in the facility or on a product shelf.

### Mobile Robot 2

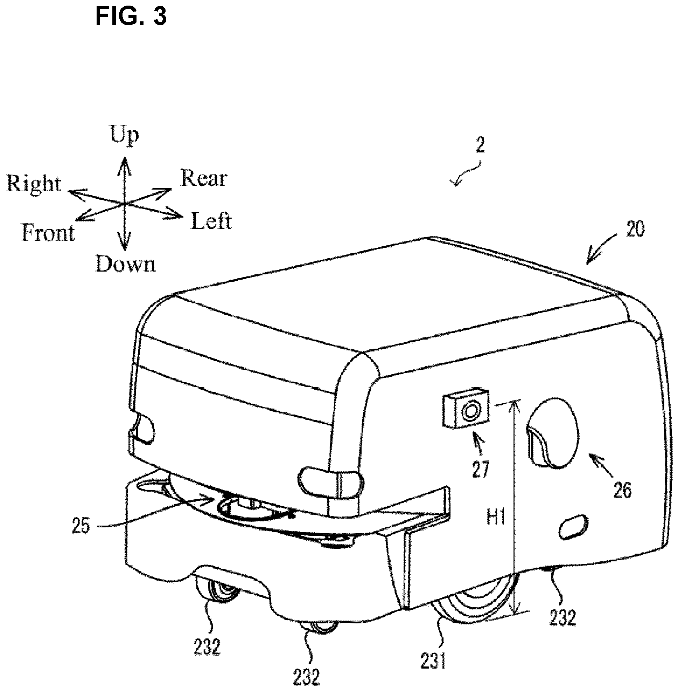

FIG. 1 is a block diagram showing a configuration of the mobile robot 2. FIG. 3 shows a perspective view showing an external appearance of the front side of the mobile robot 2. The up-down direction, the left-right direction, and the front-rear direction of the mobile robot 2 are shown in FIG. 3.

As shown in FIG. 3, the mobile robot 2 includes a main body 20 and functional units provided in the main body 20. Specifically, the main body 20 is provided with a motor 23 (see FIG. 1), a battery (not shown), an operation/display unit 24 (see FIG. 1), a front laser sensor 25, side laser sensors 26, a camera 27, a controller 21 (see FIG. 1), and the like. Also, as shown in FIG. 1, the mobile robot 2 includes a storage unit 22, a communication unit 28, and the like, which are connected to the controller 21.

As shown in FIG. 3, a pair of wheels 231 and four casters 232 are provided in a lower portion of the main body 20. The wheels 231 and the casters 232 transmit a conveying force in a traveling direction to the floor while maintaining a traveling attitude of the mobile robot 2. When the motor 23 is driven by the controller 21 and a rotational driving force of the motor is transmitted to the wheels 231, the mobile robot 2 travels in a direction corresponding to the direction of rotation of the motor 23.

The operation/display unit 24 is a user interface that includes a display unit such as a liquid crystal display or an organic EL display, which displays various types of information, and an operation unit such as a touch panel, which accepts operations. The operation/display unit 24 may be provided in an upper portion of the back face of the main body 20, for example. Various types of information registered for the mobile robot 2, such as a travel area map, a travel route (movement route), and a return position (the position of a charging station) to which the mobile robot 2 returns to be charged, are input as a result of the operation/display unit 24 being operated. Information that is input is stored in a RAM included in the controller 21 or the storage unit 22, and is used in travel control performed by the controller 21.

The front laser sensor 25 is provided on the front face of the mobile robot 2 and the side laser sensors 26 are provided on side faces of the mobile robot 2.

The front laser sensor 25 is used to detect the presence or absence of an obstacle in front of the mobile robot 2 while the mobile robot 2 is traveling forward. The front laser sensor 25 is provided in a lower portion of the front face of the main body 20. The front laser sensor 25 is a sensor that measures a distance to a detection target object by scanning the front side of the mobile robot 2 with laser beams in the horizontal direction, and is also called a 3D scanner or a laser range scanner. The front laser sensor 25 acquires measurement data in the horizontal direction on the front side. A scan angle of the front laser sensor 25 is 120°, for example.

The side laser sensors 26 are respectively provided on the side faces of the main body 20. Each side laser sensor 26 has a role of acquiring measurement data of a measurement range that spans from the front side to the rear side of the mobile robot 2 via the lower side thereof. Each side laser sensor 26 scans the measurement range spanning from the front side to the rear side of the mobile robot 2 via the lower side thereof and acquires measurement data of the measurement range by emitting laser beams toward the measurement range. A scan angle of the side laser sensors 26 is 270°, for example.

When the front laser sensor 25 and the side laser sensors 26 receive reflection light that was reflected off and returned from a detection target object in the measurement range, the controller 21 measures the time it took for the reflection light to return, and calculates a distance to the object at a scanned position based on the measurement value. Thus, the controller 21 can grasp a distance to an object that is in the measurement range, the position of the object, the shape and the size of the object in a width direction. Accordingly, the controller 21 can cause the mobile robot 2 to travel along a travel route that is registered in advance, while avoiding the object.

The camera 27 is a digital camera that captures an image of a two-dimensional code Cr attached to a product shelf and outputs the image as digital image data. The image data acquired by the camera 27 is transmitted to the controller 21. The controller 21 reads two-dimensional code information (which will be described later) from the image data and transmits the two-dimensional code information to the product management device 1. The camera 27 may be provided on each of the left and right side faces of the main body 20 or may be provided on only one of the side faces.

The communication unit 28 is a communication interface for wirelessly connecting the mobile robot 2 to the communication network N1 and executing data communication with an external device such as the product management device 1 via the communication network N1 in accordance with a predetermined communication protocol.

The storage unit 22 is a nonvolatile storage unit such as an HDD (Hard Disk Drive) or an SSD (Solid State Drive), in which various types of information are stored. Control programs such as a product management program for causing the controller 21 to execute the product management processing (see FIG. 13), which will be described later, are stored in the storage unit 22. For example, the control programs are stored non-temporarily in a storage device such as a computer-readable recording medium or a cloud storage, and are read from the storage device and stored in the storage unit 22.

The controller 21 includes control devices such as a CPU, a ROM, and a RAM. The CPU is a processor that executes various types of operation processing. The ROM is a nonvolatile storage unit in which control programs such as a BIOS and an OS for causing the CPU to execute various types of operation processing are stored in advance. The RAM is a volatile or nonvolatile storage unit in which various types of information are stored, and is used as a temporal storage memory (work area) for various types of processing executed by the CPU. As a result of the CPU executing various control programs that are stored in the ROM or the storage unit 22 in advance, the controller 21 controls the mobile robot 2.

Specifically, as shown in FIG. 1, the controller 21 includes various processing units such as a travel processing unit 211, a reading processing unit 212, and an output processing unit 213. Note that the controller 21 functions as the various processing units as a result of the CPU executing various types of processing in accordance with the product management program. Some or all of the processing units may be constituted by electronic circuits. The product management program may be a program for causing a plurality of processors to function as the processing units.

The travel processing unit 211 controls travel of the mobile robot 2. Specifically, the travel processing unit 211 controls travel of the mobile robot 2 based on various types of information such as a travel area map, a travel route, and information of the return position, which are registered in the mobile robot 2, and information of an obstacle determined based on two-dimensional data acquired by the front laser sensor 25 and the side laser sensors 26. For example, an operator registers a desired travel route by performing a teaching operation. For example, the operator manually moves the mobile robot 2 from the start potion S to the end position G in the facility SH1 (see FIG. 2) to register a trajectory of the movement as the travel route. The travel processing unit 211 causes the mobile robot 2 to autonomously move along the travel route while estimating the position of the mobile robot 2 in the travel area map based on the two-dimensional data.

The reading processing unit 212 acquires image data of a two-dimensional code Cr that is attached to a product shelf, from the camera 27, and reads (decodes) the two-dimensional code Cr based on the image data. Specifically, the reading processing unit 212 acquires information (two-dimensional code information) that is embedded in the two-dimensional code Cr by reading the two-dimensional code Cr. The two-dimensional code Cr is an example of an information-readable medium in the present invention. The information-readable medium in the present invention is not limited to a two-dimensional code, and may be various types of mediums such as a one-dimensional code or an AR marker in which information can be recorded. The camera 27 and the reading processing unit 212 are an example of a reading unit in the present invention.

Here, specific examples of two-dimensional codes Cr attached to a product shelf will be described.

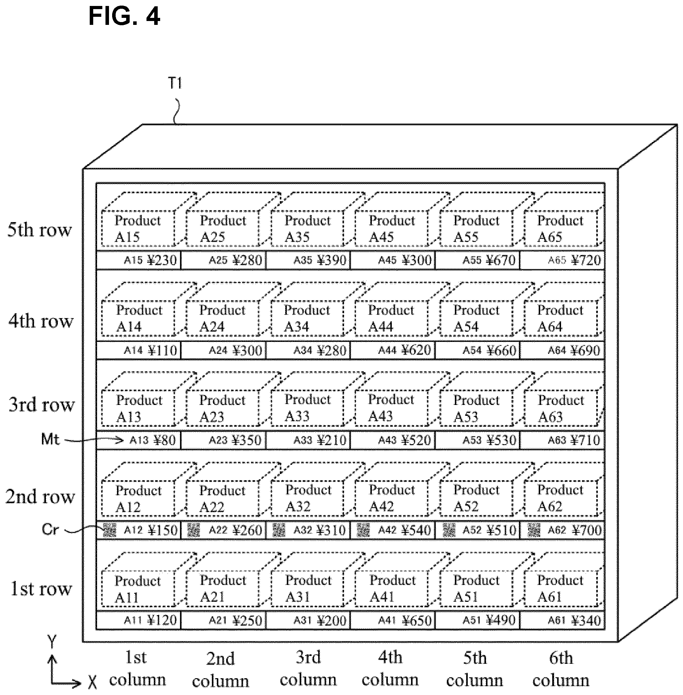

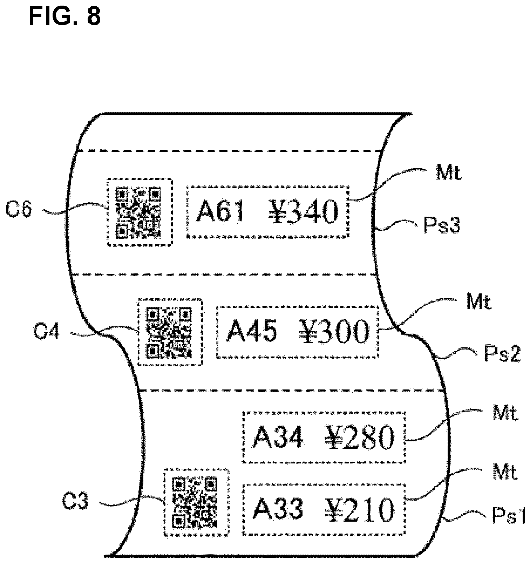

FIG. 4 shows an external appearance of a product shelf T1 that is installed in the facility SH1. The product shelf T1 is a storage shelf (display shelf) that includes a total of 30 storage spaces (shelves) arranged in five rows in the vertical direction (Y direction) and in six columns in the horizontal direction (X direction). A product is stored (displayed) on each shelf. For example, a product A11 is stored in the first row in the first column, a product A12 is stored in the second row in the first column, and a product A65 is stored in the fifth row in the sixth column. Also, a price tag Mt that shows the name of a product (product name) and a current selling price (displayed price) of the product is attached to each shelf. For example, the price tag Mt is a display medium on which the product name and the displayed price are printed (see FIG. 8), and can be attached to the front face of a shelf (shelf plate) with a seal or by being inserted into a folder. For example, a clerk prints the price tag Mt using the product management device 1 or a printer (not shown) and attaches the price tag Mt to a predetermined shelf. When changing the selling price of the product, the clerk prints a price tag Mt of the changed selling price and replaces the price tag Mt attached to the shelf.

Also, a two-dimensional code Cr is attached to each column in the product shelf T1. For example, as shown in FIG. 4, two-dimensional codes Cr are attached to shelves that are in the second row in respective columns of the product shelf T1.

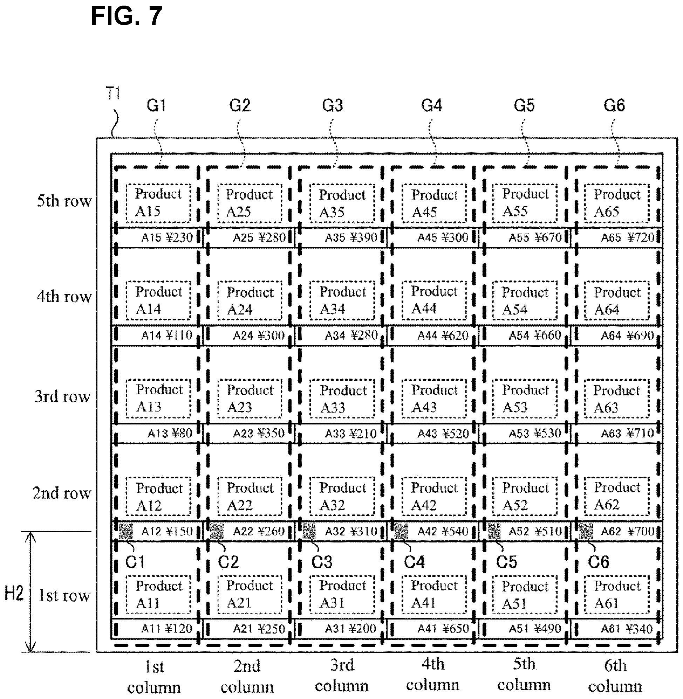

Each two-dimensional code Cr includes identification information (product ID) of each of a plurality of products stored on the shelves in that column to which the two-dimensional code Cr is attached, information of currently displayed prices of the products, and identification information (product group ID) of a product group that includes the plurality of products stored on the shelves in the column. For example, as shown in FIG. 7, a two-dimensional code C1 that is attached to the first column includes product IDs of products A11 to A15 that are respectively stored on the shelves in the first column, information of the displayed prices of the products A11 to A15, and a product group ID of a product group G1 that includes the products A11 to A15. Also, a two-dimensional code C2 that is attached to the second column includes product IDs of products A21 to A25 that are respectively stored on the shelves in the second column, information of the displayed prices of the products A21 to A25, and a product group ID of a product group G2 that includes the products A21 to A25.

Each product group is a group that includes a plurality of products arranged in a predetermined range. For example, each product group includes products that are respectively arranged from the bottom to the top rows in a column extending in the vertical direction of the product shelf. In the example shown in FIG. 7, each product group includes five types of products respectively arranged in the first to the fifth rows in the product shelf T1.

The output processing unit 213 outputs information that was read by the reading processing unit 212 from a two-dimensional code Cr to the product management device 1. Specifically, upon the reading processing unit 212 reading a two-dimensional code Cr, the output processing unit 213 outputs, to the product management device 1, two-dimensional code information that includes product IDs of a plurality of products stored on the shelves in the column to which the two-dimensional code Cr is attached, the currently displayed prices of those products, and a product group ID of the product group including the products stored on the shelves in the column.

The reading processing unit 212 sequentially reads two-dimensional codes Cr that are respectively provided for the columns in the product shelf while the mobile robot 2 is moving (traveling) in front of the product shelf, and every time the reading processing unit 212 acquires two-dimensional code information (a product group ID, product IDs, and displayed prices) embedded in a two-dimensional code Cr, the output processing unit 213 outputs the two-dimensional code information to the product management device 1.

Here, the two-dimensional codes Cr are provided at positions where the two-dimensional codes Cr can be read by the mobile robot 2 while the mobile robot 2 is traveling in parallel with the product shelf in front of the product shelf. Specifically, the plurality of two-dimensional codes Cr respectively provided for the columns in the product shelf are provided at the same height from the floor. Also, a height H1 of the camera 27 of the mobile robot 2 from the floor (see FIG. 3) is equal to a height H2 of the two-dimensional codes Cr from the floor (see FIG. 7). Therefore, the mobile robot 2 need not change the height of the camera 27 when reading the two-dimensional codes Cr. Accordingly, the mobile robot 2 can be downsized and can be configured to have a low bottom.

### Product Management Device 1

As shown in FIG. 1, the product management device 1 is a server that includes a controller 11, a storage unit 12, an operation/display unit 13, a communication unit 14, and the like. The product management device 1 may be a facility terminal (POS terminal) that is installed in the facility SH1 or a cloud server that is installed outside the facility SH1. Note that the product management device 1 is not limited to a single computer, and may be a computer system that operates as a result of a plurality of computers cooperating with each other. Also, various types of processing executed in the product management device 1 may be distributed to and executed by one or more processors.

The communication unit 14 is a communication interface for connecting the product management device 1 to the communication network N1 by a wire or wirelessly and executing data communication with an external device such as the mobile robot 2 via the communication network N1 in accordance with a predetermined communication protocol.

The operation/display unit 13 is a user interface that includes a display unit such as a liquid crystal display or an organic EL display, which displays various types of information, and an operation unit such as a mouse, a keyboard, or a touch panel, which accepts operations.

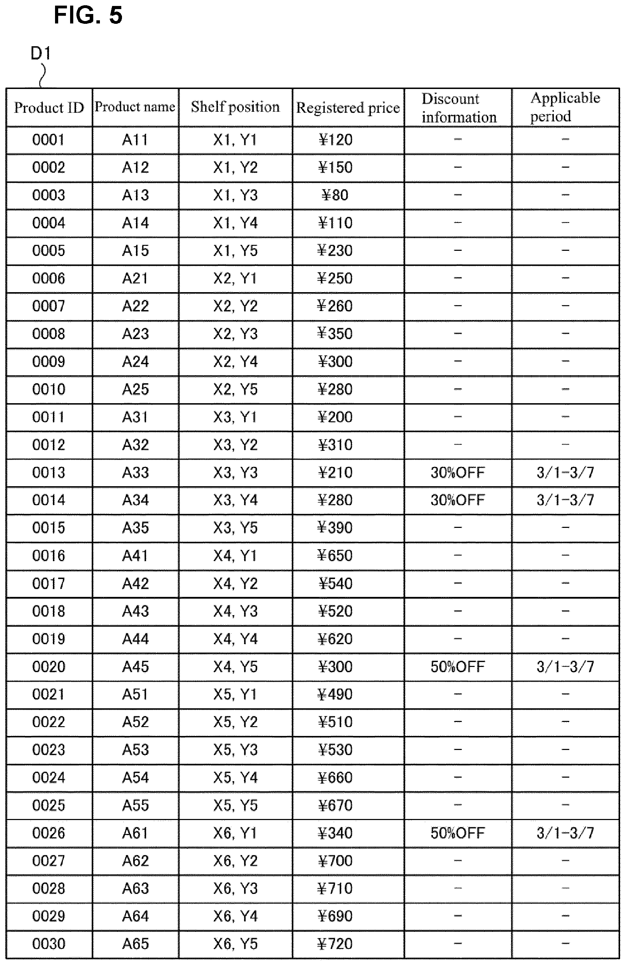

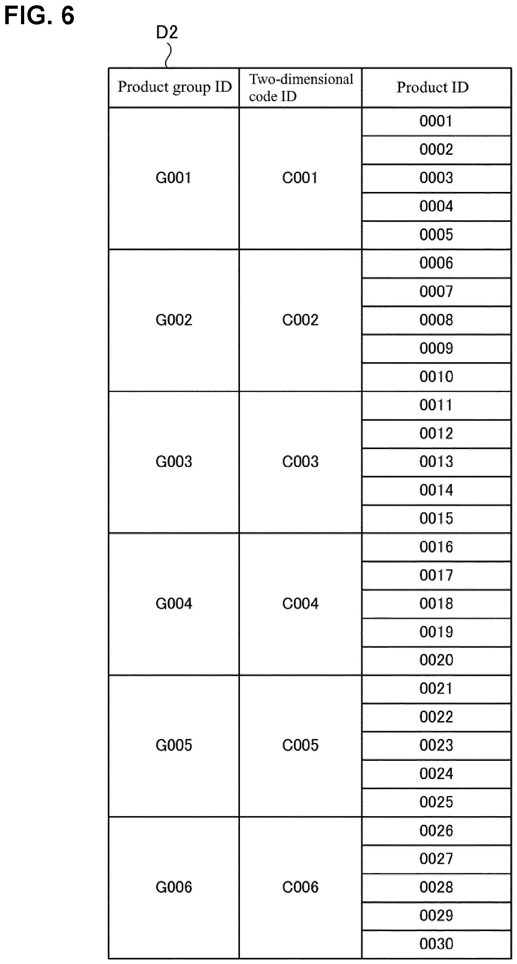

The storage unit 12 is a nonvolatile storage unit such as an HDD or an SSD, in which various types of information are stored. Specifically, data such as product information D1 and product group information D2 are stored in the storage unit 12. The product information D1 includes information regarding each product that is sold in the facility SH1. The product group information D2 includes information regarding each product group that includes a plurality of products. FIG. 5 is a diagram showing an example of the product information D1 and FIG. 6 is a diagram showing an example of the product group information D2. FIGS. 5 and 6 show product information D1 and product group information D2 that correspond to the facility SH1.

As shown in FIG. 5, the product information D1 includes information regarding each product, such as a corresponding "product ID", a "product name", a "shelf position", a "registered price", "discount information", and an "applicable period". The product ID is identification information of a product that is sold in the facility SH1, and the product name is the name of the product. The shelf position is information that indicates a storage position of the product in a product shelf. For example, the shelf position is expressed with the position of a column in the horizontal direction (X direction) and the position of a row in the vertical direction (Y direction). For example, the shelf position of the product A11 that is in the first column and in the first row is expressed as [X1, Y1], the shelf position of the product A12 that is in the first column and in the second row is expressed as [X1, Y2], and the shelf position of the product A65 that is in the sixth column and in the fifth row is expressed as [X6, Y5].

The registered price is a selling price that is set for the product, and payment is carried out based on the registered price. For example, an information code (one-dimensional code) in which the registered price is embedded is attached to each product, and upon the one-dimensional code being read at a register, an accounting terminal carries out payment at the registered price. That is, the registered price is associated with price information that is registered in a POS terminal.

The discount information is information regarding a discount price that is set when the product is discounted from its regular price. The applicable period is information regarding a period during which the discount price is applicable. For example, in a case where the regular price of a product A33 is ¥300 and the product A33 is 30% off during a period from March 1 to March 7, a discount price "¥210" is registered as the registered price, "30% OFF" is registered as the discount information, and "March 1 to March 7" is registered as the applicable period. Likewise, in a case where the regular price of a product A45 is ¥600 and the product A45 is 50% off during the period from March 1 to March 7, a discount price "¥300" is registered as the registered price, "50% OFF" is registered as the discount information, and "March 1 to March 7" is registered as the applicable period.

A manager of the facility SH1 registers information regarding each product in the product information D1. Also, when making a bargain sale such as a discount service, the manager changes the registered price and registers the discount information and the applicable period in the product information D1. When a bargain period (the applicable period) has ended, the manager changes the registered price and deletes the discount information and the applicable period. Note that the controller 11 may automatically execute processing for changing the registered price and processing for deleting the discount information and the applicable period when the bargain period has ended. In addition to the information described above, information such as a product code, a stock, and a sales result may also be included in the product information D1. The product information D1 may be stored in a POS terminal in the facility SH1.

As shown in FIG. 6, the product group information D2 includes information regarding each product group, such as a corresponding "product group ID", a "two-dimensional code ID", and "product IDs". The product group ID is identification information of a product group that includes a plurality of products. The two-dimensional code ID is identification information of a two-dimensional code Cr that is attached to the product shelf. For example, a two-dimensional code ID "C001" (two-dimensional code C1) and product IDs "0001" to "0005" (products A11 to A15) are registered in association with a product group ID "G001" (product group G1). Also, for example, a two-dimensional code ID "C002" (two-dimensional code C2) and product IDs "0006" to "0010" (products A21 to A25) are registered in association with a product group ID "G002" (product group G2).

Two-dimensional codes Cr are attached to the product shelf in accordance with the product group information D2 shown in FIG. 6. For example, the two-dimensional code C1 having the two-dimensional code ID "C001" includes the product IDs "0001" to "0005" of the products A11 to A15 stored in the first column of the product shelf T1, information of registered prices of the products (see FIG. 5), and the product group ID "G001" of the product group G1 including the products A11 to A15, and the two-dimensional code C1 is attached to a shelf that is in the first column and in the second row in the product shelf T1 (see FIG. 7). Also, a two-dimensional code C4 having a two-dimensional code ID "C004" includes product IDs "0016" to "0020" of products A41 to A45 stored in the fourth column of the product shelf T1, information of registered prices of the products (see FIG. 5), and a product group ID "G004" of a product group G4 that includes the products A41 to A45, and the two-dimensional code C4 is attached to a shelf that is in the fourth column and in the second row in the product shelf T1 (see FIG. 7).

The manager can determine products to be grouped and register the product group information D2. The manager may create a product group for each column or create a product group for a plurality of columns.

In another embodiment, some or all of the product information D1 and the product group information D2 may be stored in another server (e.g., a POS terminal or a cloud server) that can be accessed by the product management device 1 via the communication network N1. In this case, the controller 11 of the product management device 1 may acquire the information from the other server and execute processing such as the product management processing (see FIG. 13), which will be described later.

Furthermore, control programs such as the product management program for causing the controller 11 to execute the product management processing (see

FIG. 13), which will be described later, are stored in the storage unit 12. For example, the product management program is recorded non-temporarily on a computer-readable recording medium such as a CD or a DVD, and is read by a reading device (not shown) such as a CD drive or a DVD drive included in the product management device 1 and is stored in the storage unit 12.

The controller 11 includes control devices such as a CPU, a ROM, and a RAM. The CPU is a processor that executes various types of operation processing. The ROM is a nonvolatile storage unit in which control programs such as a BIOS and an OS for causing the CPU to execute various types of operation processing are stored in advance. The RAM is a volatile or nonvolatile storage unit in which various types of information are stored, and is used as a temporal storage memory (work area) for various types of processing executed by the CPU. As a result of the CPU executing various control programs that are stored in the ROM or the storage unit 12 in advance, the controller 11 controls the product management device 1.

In conventional technologies, images of price tags of products included in a product shelf need to be captured one by one to be checked, and accordingly, there is a problem in that it takes a long time to check whether displayed prices on the price tags are correct or not. In contrast, the product management device 1 according to the present embodiment makes it possible to check whether displayed prices of products are correct or not in a short time.

Specifically, as shown in FIG. 1, the controller 11 includes various processing units such as an acceptance processing unit 111, an output processing unit 112, an acquisition processing unit 113, a determination processing unit 114, and a notification processing unit 115. Note that the controller 11 functions as the various processing units as a result of the CPU executing various types of processing in accordance with the product management program. Some or all of the processing units may be constituted by electronic circuits. Note that the product management program may be a program for causing a plurality of processors to function as the processing units.

The acceptance processing unit 111 accepts various operations from the manager of the facility SH1, a clerk, or the like. For example, the acceptance processing unit 111 accepts an operation for registering the product information D1 and the product group information D2. Upon accepting the operation, the acceptance processing unit 111 stores the product information D1 and the product group information D2 in the storage unit 12. Also, when making a bargain sale such as a discount service, for example, the manager changes the registered price and registers the discount information and the applicable period in the product information D1. Also, when the bargain period (the applicable period) has ended, the manager changes the registered price and deletes the discount information and the applicable period. Upon accepting these operations, the acceptance processing unit 111 changes the product information D1.

The output processing unit 112 outputs price tags Mt and two-dimensional codes Cr based on the product information D1 and the product group information D2. For example, when the manager gives an output instruction (print instruction) after registering the product information D1 and the product group information D2, the output processing unit 112 causes the product management device 1 or a printer (not shown) to output display mediums Ps (see FIG. 8) on which price tags Mt and two-dimensional codes Cr are displayed. Here, the output processing unit 112 outputs price tags Mt and a two-dimensional code Cr for each product group. For example, the output processing unit 112 outputs a display medium Ps that includes price tags Mt of the products A11 to A15 stored in the first column in the product shelf T1 and the two-dimensional code C1 as a set and outputs a display medium Ps that includes price tags Mt of the products A21 to A25 stored in the second column in the product shelf T1 and the two-dimensional code C2 as a set. The output processing unit 112 is an example of an output processing unit in the present invention. Each display medium Ps is an example of a display medium in the present invention. The display medium in the present invention may be a print medium such as a price tag seal or a display tag that includes a display screen.

A clerk of the facility SH1 attaches the price tags Mt to corresponding shelves of the products A11 to A15 in the first column and attaches the two-dimensional code C1 to the shelf that is in the second row in the first column, for example. Also, the clerk attaches the price tags Mt to corresponding shelves of the products A21 to A25 in the second column and attaches the two-dimensional code C2 to a shelf that is in the second row in the second column, for example.

Here, when making a bargain sale such as a discount service for specific products, the manager changes the registered prices and registers the discount information and the applicable period in the product information D1. Also, the manager prints price tags Mt that show reduced registered prices (discount prices) of the specific products and two-dimensional codes Cr that include information (two-dimensional code information) of product group IDs of product groups that include the specific products, product IDs of products that are included in the product groups, and registered prices of the products. FIG. 5 shows product information D1 after products A33, A34, A45, and A61, which are the specific products, are discounted. Each of the discount prices is an example of a special price in the present invention.

FIG. 8 shows price tags Mt and two-dimensional codes C3, C4, and C5, reflecting the reduced registered prices (selling prices) of the products A33, A34, A45, and A61. The two-dimensional code C3 includes information of the reduced registered prices of the products A33 and A34, registered prices (regular prices) of products A31, A32, and A35, a product group ID "G003" of a product group G3, and a two-dimensional code ID "C003" of the two-dimensional code C3. Also, the two-dimensional code C4 includes information of the reduced registered price of the product A45, registered prices (regular prices) of products A41 to A44, the product group ID "G004" of the product group G4, and a two-dimensional code ID "C004" of the two-dimensional code C4. Also, the two-dimensional code C6 includes information of the reduced registered price of the product A61, registered prices (regular prices) of products A62 to A65, a product group ID "G006" of a product group G6, and a two-dimensional code ID "C006" of the two-dimensional code C6.

The output processing unit 112 outputs a display medium Ps1 that includes a price tag Mt of the product A33, a price tag Mt of the product A34, and the two-dimensional code C3 as a set, outputs a display medium Ps2 that includes a price tag Mt of the product A45 and the two-dimensional code C4 as a set, and outputs a display medium Ps3 that includes a price tag Mt of the product A61 and the two-dimensional code C6 as a set. As described above, the output processing unit 112 outputs display mediums each including a set of a two-dimensional code Cr and a price tag Mt of a displayed price of at least one product included in a product group.

Upon receiving the display medium Ps1, the clerk replaces price tags Mt of regular prices of the products A33 and A34, which are attached to the product shelf T1, with the price tags Mt of the discount prices included in the display medium Ps1, and replaces a two-dimensional code C3 attached to a shelf in the second row with the two-dimensional code C3 included in the display medium Ps1. Likewise, the clerk replaces a price tag Mt of the product A45 and a two-dimensional code C4, and replaces a price tag Mt of the product A61 and a two-dimensional code C6. FIGS. 4 and 7 show a state where the price tags Mt of the discount prices and the two-dimensional codes Cr are attached.

When an applicable period of the discount service has ended, the clerk changes the discount prices of the specific products to regular prices.

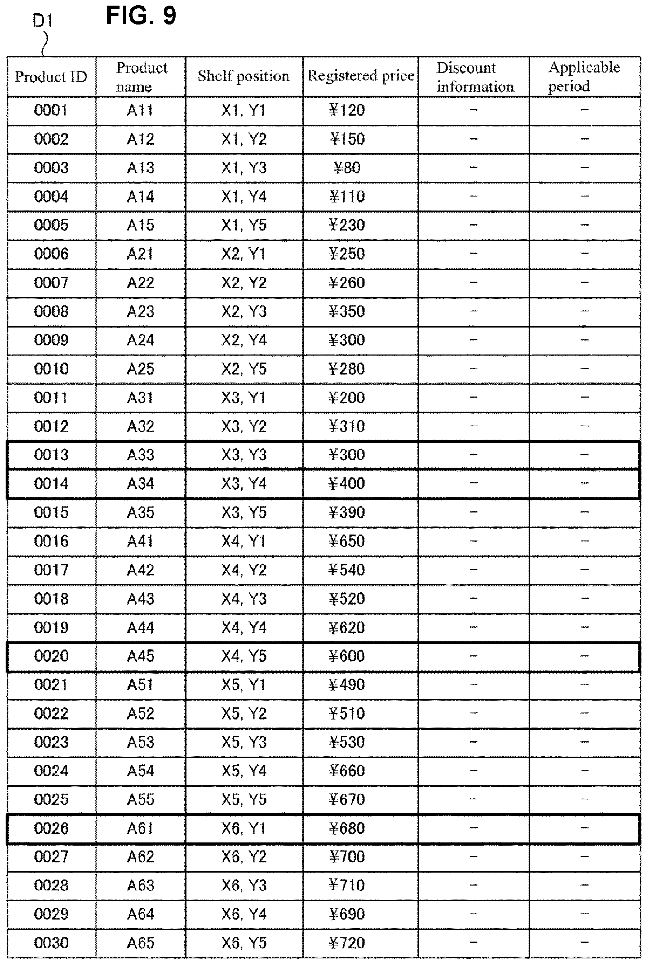

For example, when the applicable period has ended, the controller 11 executes change processing for changing the registered prices, the discount information, and the applicable period in the product information D1. The controller 11 may execute the change processing upon the applicable period having ended, or execute the change processing in response to a change operation performed by the manager. FIG. 9 shows product information D1 in a state where the change processing has been executed. As a result of the product information D1 being changed, accounting processing is now carried out at the changed registered price (here, regular price) at the register with respect to the products that were previously discounted.

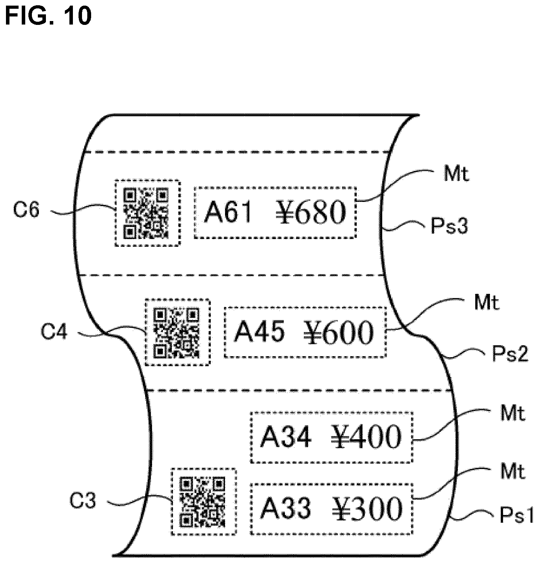

Also, when the applicable period has ended, the controller 11 prints price tags Mt and two-dimensional codes Cr that correspond to regular prices, with respect to the specific products for which the price tags Mt of the discount prices are attached. The controller 11 may execute the print processing upon the applicable period having ended, or execute the print processing in response to a print operation performed by the manager. FIG. 10 shows display mediums Ps1, Ps2, and Ps3 on which price tags Mt of regular prices of the products A33, A34, A45, and A61 and two-dimensional codes C3, C4, and C5 are printed. The output processing unit 112 outputs the display medium Ps1 that includes the price tag Mt of the regular price of the product A33, the price tag Mt of the regular price of the product A34, and the two-dimensional code C3 as a set, outputs the display medium Ps2 that includes the price tag Mt of the regular price of the product A45 and the two-dimensional code C4 as a set, and outputs the display medium Ps3 that includes the price tag Mt of the regular price of the product A61 and the two-dimensional code C6 as a set.

The two-dimensional code C3 includes information of registered prices of the products A33 and A34, which are the regular prices, registered prices of the products A31, A32, and A35, the product group ID "G003" of the product group G3, and the two-dimensional code ID "C003" of the two-dimensional code C3. Also, the two-dimensional code C4 includes information of a registered price of the product A45, which is the regular price, registered prices of the products A41 to A44, the product group ID "G004" of the product group G4, and the two-dimensional code ID "C004" of the two-dimensional code C4. Also, the two-dimensional code C6 includes information of a registered price of the product A61, which is the regular price, registered prices of the products A62 to A65, the product group ID "G006" of the product group G6, and the two-dimensional code ID "C006" of the two-dimensional code C6.

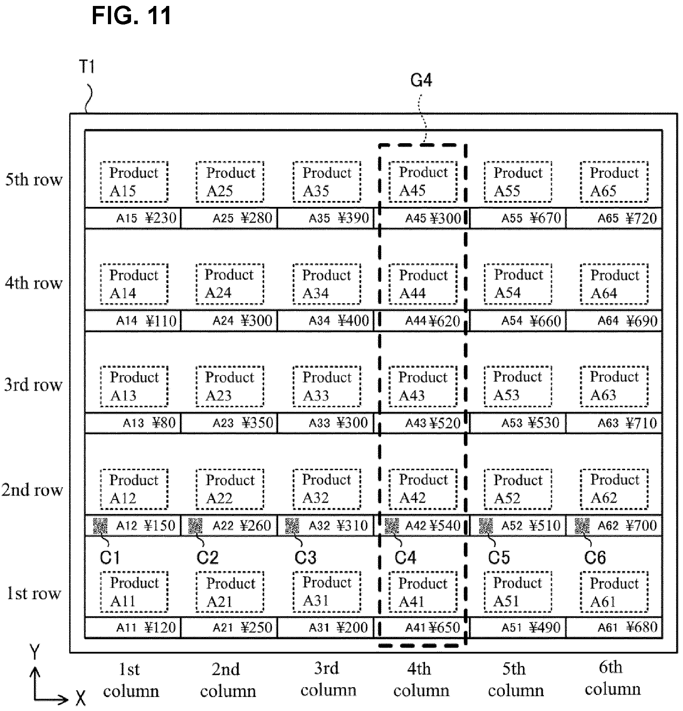

Upon receiving the display mediums Ps, the clerk changes the discount prices of the specific products to the regular prices. Here, if the clerk forgets to replace the price tag Mt of the discount price (¥300) of the product A45 with the price tag Mt of the regular price (¥600) as shown in FIG. 11, the following problem may occur. For example, a customer who sees the currently displayed price of the product A45 and thinks that he can buy the product A45 at ¥300 makes a payment at the register to buy the product A45. At the register, the registered price (here, ¥600) that is registered in the product information D1 (see FIG. 9) is acquired from a one-dimensional code on the product A45 and the payment is carried out at ¥600. If the displayed price (discount price) attached to the product A45 differs from the correct registered price (regular price) as described above, trouble may occur.

Therefore, in order to avoid such a situation, the product management device 1 according to the present embodiment is configured to check whether displayed prices attached to products are correct or not based on two-dimensional code information acquired from the mobile robot 2, as described below. Note that the check is executed after the facility SH1 is closed or before the facility SH1 is opened, for example.

Specifically, the acquisition processing unit 113 acquires information that is output from the mobile robot 2. Specifically, the acquisition processing unit 113 acquires two-dimensional code information that includes a product group ID, product IDs, and displayed prices, which are read by the reading processing unit 212 of the mobile robot 2 from an image of a two-dimensional code Cr captured by the camera 27. For example, when the camera 27 of the mobile robot 2 captures an image of the two-dimensional code C1 (see FIG. 11) attached to the product shelf T1, the reading processing unit 212 reads the two-dimensional code C1 and acquires two-dimensional code information including the product group ID "G001" of the product group G1, the product IDs "0001" to "0005" of the products A11 to A15, and displayed prices of the products A11 to A15 and the output processing unit 213 outputs the two-dimensional code information to the product management device 1, the acquisition processing unit 113 acquires the product group ID "G001", the product IDs "0001" to "0005", and the displayed prices of the products A11 to A15. Likewise, the acquisition processing unit 113 sequentially acquires two-dimensional code information associated with two-dimensional codes C2 to C6 from the mobile robot 2.

Also, the acquisition processing unit 113 acquires registered prices of the plurality of products that are associated with the acquired product group IDs. Specifically, the acquisition processing unit 113 acquires registered prices of the plurality of products associated with the product group IDs by referring to the product information D1 (see FIG. 9, for example). For example, upon acquiring the product group ID "G003" of the product group G3 from the mobile robot 2, the acquisition processing unit 113 acquires registered prices of the products A31 to A35 associated with the product group ID "G003". Also, for example, upon acquiring the product group ID "G004" of the product group G4 from the mobile robot 2, the acquisition processing unit 113 acquires registered prices of the products A41 to A45 associated with the product group ID "G004".

The acquisition processing unit 113 is an example of a first acquisition processing unit and a second acquisition processing unit in the present invention. Note that the acquisition processing unit 113 may be divided into a processing unit that corresponds to the first acquisition processing unit and a processing unit that corresponds to the second acquisition processing unit.

The determination processing unit 114 determines whether or not at least any of the displayed prices of the plurality of products acquired by the acquisition processing unit 113 matches at least any of the registered prices of the plurality of products acquired by the acquisition processing unit 113. That is, the determination processing unit 114 determines whether displayed prices attached to the product shelf or the products are correct or not.

For example, when the acquisition processing unit 113 has acquired displayed prices of the products A31 to A35 in the product group G3 (see FIG. 11; the product A31 "¥200", the product A32 "¥310", the product A33 "¥300", the product A34 "¥400", and the product A35 "¥390") and registered prices of the products A31 to A35 (see FIG. 9, the product A31 "¥200", the product A32 "¥310", the product A33 "¥300", the product A34 "¥400", and the product A35 "¥390"), the determination processing unit 114 compares the displayed price of each product with the registered price of the product and determines whether or not the displayed price matches the registered price. Here, the determination processing unit 114 determines that the displayed prices of the products A31 to A35 respectively match the registered prices of the products A31 to A35.

On the other hand, when the acquisition processing unit 113 has acquired displayed prices of the products A41 to A45 in the product group G4 (see FIG. 11; the product A41 "¥650", the product A42 "¥540", the product A43 "¥520", the product A44 "¥620", and the product A45 "¥300") and registered prices of the products A41 to A45 (see FIG. 9; the product A41 "¥650", the product A42 "¥540", the product A43 "¥520", the product A44 "¥620", and the product A45 "¥600"), the determination processing unit 114 compares the displayed price of each product with the registered price of the product and determines whether or not the displayed price matches the registered price. Here, the determination processing unit 114 determines that the displayed prices of the products A41 to A44 respectively match the registered prices of the products A41 to A44, but the displayed price (¥300) of the product A45 does not match the registered price (¥600) of the product A45. From this determination result, it can be found that the price tag Mt of the product A45 is forgotten to be replaced with a price tag Mt of the regular price although an applicable period of the discount price has expired.

As described above, the determination processing unit 114 determines whether displayed prices on price tags Mt currently attached to the product shelf T1 are correct prices (registered prices) or not (i.e., determines whether the displayed prices are correct or not). When a displayed price of at least one product among a plurality of products included in a product group does not match a registered price of the product, the determination processing unit 114 determines that the displayed price is incorrect. When displayed prices of all the products included in the product group match registered prices of the respective products, the determination processing unit 114 determines that the displayed prices are correct.

The determination processing unit 114 executes the determination processing for each product group. With this configuration according to the present embodiment, it is possible to reduce a processing load when compared with a case where the determination processing is executed for each product by reading a two-dimensional code Cr attached to the product, for example.

In another embodiment, if a two-dimensional code Cr includes information of an applicable period during which a discount price is applicable, the determination processing unit 114 may determine whether a displayed price is correct or not based on the applicable period. For example, when an applicable period read from the two-dimensional code C3 attached to the product shelf T1 elapsed before the current date and time, a displayed price (e.g., a discount price) on the currently attached price tag Mt is no longer applicable, and therefore the determination processing unit 114 determines that the displayed price is incorrect.

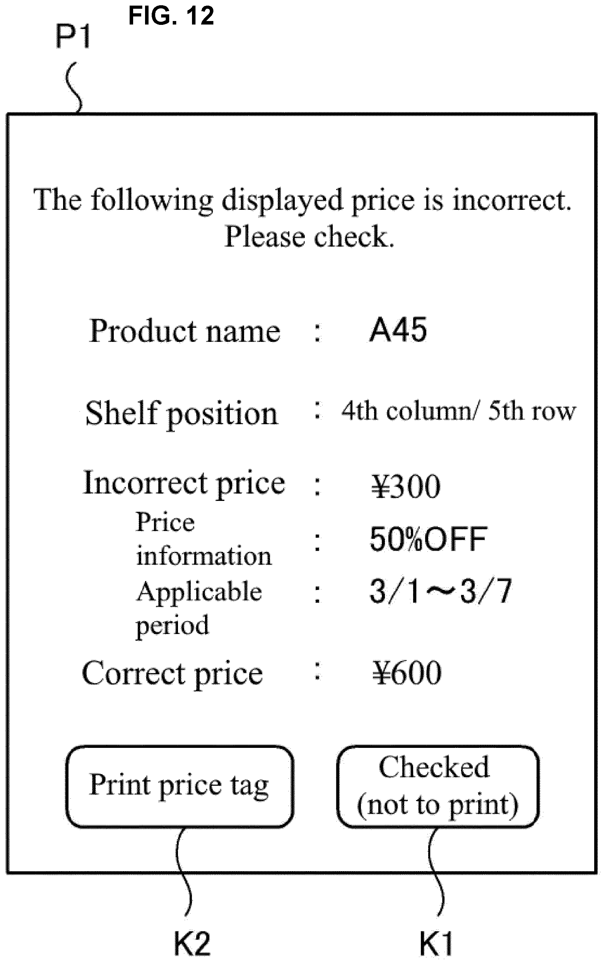

The notification processing unit 115 outputs predetermined information if a displayed price of at least one of the plurality of products acquired by the acquisition processing unit 113 does not match the corresponding registered price of the product acquired by the acquisition processing unit 113. Specifically, the notification processing unit 115 outputs information that urges replacement of the displayed price (see FIG. 11) with the registered price (see FIG. 9) with respect to the product of which the displayed price does not match the registered price. For example, the notification processing unit 115 may cause the operation/display unit 13 to display a notification screen P1 shown in FIG. 12. Information such as the product name of the product of which the displayed price is incorrect and the shelf position, the incorrect price (displayed price), and the correct price (registered price) of the product are displayed in the notification screen P1. Upon checking the notification screen P1, the clerk presses a check button K1. Also, when the clerk presses a print button K2 in the notification screen P1, the notification processing unit 115 outputs a display medium Ps that includes a price tag Mt showing the registered price and a two-dimensional code Cr as a set.

In the above example, the notification processing unit 115 outputs information that urges replacement of the displayed price (¥300) of the product A45 with the registered price (¥600). Also, the notification processing unit 115 outputs a display medium Ps that includes a price tag Mt showing the correct price (¥600) of the product A45 and a two-dimensional code C4 as a set. In this case, the two-dimensional code C4 includes the product IDs "0016" to "0020" of the products A41 to A45, displayed prices of the products (see FIG. 9; the product A41 "¥650", the product A42 "¥540", the product A43 "¥520", the product A44 "¥620", and the product A45 "¥600"), and the product group ID "G004" of the product group G4. Upon receiving the display medium Ps, the clerk replaces the price tag Mt of the product A45 and the two-dimensional code C4 attached to the shelf in the second row of the product shelf T1. Thus, a correct selling price is displayed for the product A45.

Note that the notification processing unit 115 may execute the processing for outputting the display medium Ps that includes the price tag Mt of the correct price and the two-dimensional code C4 as a set upon the determination processing unit 114 having determined that the displayed price is incorrect. Also, the notification processing unit 115 may output the predetermined information (notification screen P1) to a portable terminal (e.g., a handy terminal) held by the clerk.

### Product Management Processing

The following describes an example of the product management processing that is executed by the controller 11 of the product management device 1, with reference to FIG. 13. The controller 11 starts the product management processing when the mobile robot 2 starts autonomous movement, for example.

Note that the present invention may be taken to be an invention of a product management method in which the controller 11 executes some or all steps of the product management processing or an invention of a product management program for causing the controller 11 to execute some or all steps of the product management method. Also, the present invention may be an invention of a product management method in which one or more processors execute the product management processing.

In step S1, the controller 11 determines whether or not the mobile robot 2 has acquired information (two-dimensional code information) of a two-dimensional code Cr attached to the product shelf T1. Specifically, the controller 11 determines whether or not information (two-dimensional code information) embedded in the two-dimensional code Cr has been acquired from the mobile robot 2. For example, the mobile robot 2 starts a work for checking displayed prices from the start position S (see FIG. 2) in the facility SH1. Upon reading the two-dimensional code C1 attached to the shelf in the second row in the first column of the product shelf T1 (see FIG. 11), the mobile robot 2 acquires two-dimensional code information that includes the product group ID "G001" of the product group G1, the product IDs "0001" to "0005" of the products A11 to A15, and displayed prices of the products A11 to A15. The mobile robot 2 outputs the acquired two-dimensional code information to the product management device 1. Upon the controller 11 having acquired the two-dimensional code information from the mobile robot 2 (S1: Yes), the processing proceeds to step S2. The controller 11 waits until the two-dimensional code information is acquired from the mobile robot 2 (S1: No). Step S1 is an example of a first acquisition step in the present invention.

In step S2, the controller 11 acquires registered prices of the plurality of products associated with the acquired product group ID. Specifically, the controller 11 acquires registered prices of the plurality of products associated with the product group ID by referring to the product information D1 (see FIG. 9). For example, upon acquiring the product group ID "G001" of the product group G1 from the mobile robot 2, the controller 11 acquires registered prices of the products A11 to A15 associated with the product group ID "G001". Step S2 is an example of a second acquisition step in the present invention.

Next, in step S3, the controller 11 compares the displayed prices of the plurality of products acquired in step S1 with the registered prices of the plurality of products acquired in step S2. For example, the controller 11 compares the displayed prices of the products A11 to A15 (see FIG. 11) with the registered prices of the products A11 to A15 (see FIG. 9).

Next, in step S4, the controller 11 determines whether or not the displayed prices of the plurality of products match the registered prices of the plurality of products. That is, the controller 11 determines whether the displayed prices attached to the product shelf or the products are correct or not. For example, the controller 11 determines whether or not the displayed prices of the products A11 to A15 (see FIG. 11) respectively match the registered prices of the products A11 to A15 (see FIG. 9). If the displayed prices of all products included in the product group respectively match the registered prices of the products (S4: Yes), the processing proceeds to step S5. On the other hand, if a displayed price of at least one product included in the product group does not match the corresponding registered price of the product (S4: No), the processing proceeds to step S41.

For example, the displayed prices of the products A11 to A15 (see FIG. 11) respectively match the registered prices of the products A11 to A15 (see FIG. 9), and accordingly, the processing proceeds to step S5.

In step S5, the controller 11 determines whether or not the work for checking the displayed prices has ended. The controller 11 determines that the work has ended, upon acquiring information indicating that the mobile robot 2 reached the end position G (see FIG. 2) in the facility SH1, for example. Note that the end position G corresponds to a position at which the mobile robot 2 reads a two-dimensional code Cr of the last column in a product shelf T8. Upon the work has ended (S5: Yes), the controller 11 ends the product management processing. When the work has not ended (S5: No), the controller 11 returns the processing to step S1.

For example, when the mobile robot 2 read the two-dimensional code C1 in the first column and the controller 11 ended the work for checking whether the displayed prices of the products A11 to A15 are correct or not, the controller 11 returns to step S1 and waits until the next two-dimensional code information is acquired.

Here, when displayed prices are checked sequentially for columns in the product shelf T1 and an incorrect displayed price is found when the fourth column (see FIG. 11) is checked (S4: No), the controller 11 executes processing described below in step S41.

For example, in step S1, the controller 11 acquires displayed prices of the products A41 to A45 in the product group G4 (see FIG. 11; the product A41 "¥650", the product A42 "¥540", the product A43 "¥520", the product A44 "¥620", and the product A45 "¥300"). Also, in step S2, the controller 11 acquires registered prices of the products A41 to A45 (see FIG. 9; the product A41 "¥650", the product A42 "¥540", the product A43 "¥520", the product A44 "¥620", and the product A45 "¥600"). In this case, the controller 11 determines that the displayed prices of the products A41 to A44 match the registered prices of the products A41 to A44, but the displayed price (¥300) of the product A45 does not match the registered price (¥600) of the product A45 (S4: No).

In step S41, the controller 11 outputs information (replacement information) that urges replacement of the displayed price with the registered price with respect to the product of which the displayed price does not match the registered price. For example, the controller 11 causes the operation/display unit 13 to display the notification screen P1 shown in FIG. 12 to urge replacement of the displayed price (¥300) of the product A45 with the registered price (¥600). Upon checking the notification screen P1, the clerk presses the check button K1. When the print button K2 in the notification screen P1 is pressed by the clerk, the controller 11 outputs a display medium Ps that includes a price tag Mt showing the correct price (¥600) of the product A45 and a two-dimensional code C4 as a set. In this case, the two-dimensional code C4 includes the product IDs "0016" to "0020" of the products A41 to A45, displayed prices of the products (see FIG. 9; the product A41 "¥650", the product A42 "¥540", the product A43 "¥520", the product A44 "¥620", and the product A45 "¥600"), and the product group ID "G004" of the product group G4.

Upon receiving the display medium Ps, the clerk replaces the price tag Mt of the product A45 and the two-dimensional code C4 attached to the shelf in the second row of the product shelf T1. Thus, a correct selling price is displayed for the product A45. Step S41 is an example of a notification step in the present invention.

After step S41, the processing proceeds to step S5. As described above, every time the mobile robot 2 reads a two-dimensional code Cr while autonomously moving in the facility SH1, the controller 11 of the product management device 1 executes the processing for checking whether displayed prices of products are correct or not. When the work for checking whether displayed prices are correct or not is complete with respect to all products stored in each product shelf in the facility SH1 (S5: Yes), the controller 11 ends the product management processing.

As described above, the product management system 10 according to the present embodiment acquires displayed prices of a plurality of products and identification information of a product group that includes the plurality of products from a reading unit that reads an information-readable medium (e.g., a two-dimensional code Cr) that corresponds to the product group and is provided at a predetermined position on a product shelf, and the product management system 10 acquires registered prices of the plurality of products associated with the acquired identification information of the product group. Then, if an acquired displayed price of at least one of the plurality of products does not match an acquired registered price of the product, the product management system 10 outputs predetermined information.

According to the above configuration, the product management system 10 can acquire currently displayed prices of a plurality of products included in a product group corresponding to a two-dimensional code Cr by reading the single two-dimensional code Cr attached to the product shelf. Also, the product management system 10 can acquire correct selling prices (registered prices) associated with the plurality of products based on the product group. Then, the product management system 10 can determine whether the displayed prices are correct or not by comparing the displayed prices with the registered prices. As described above, displayed prices of a plurality of products included in a predetermined range (product group) can be collectively checked, and therefore, whether the displayed prices of the products are correct or not can be checked in a short time.

Also, the product management system 10 is configured such that the mobile robot 2 that includes the camera 27 and can autonomously move reads each two-dimensional code Cr while autonomously moving in an area in which the product shelf is arranged. This configuration eliminates the need for a manual check of displayed prices performed by the clerk. Also, mistakes such as overlooking can be prevented. Furthermore, when reading the two-dimensional codes Cr, the mobile robot 2 need not drive the reading unit (camera 27) in the vertical direction because the two-dimensional codes Cr are provided at a constant height (height H2 shown in FIG. 7), and therefore, a driving load can be reduced and the structure of the reading unit can be simplified. Also, the time it takes to perform the work can be reduced.

Also, according to the present embodiment, when a displayed price of a specific product is to be changed, a display medium (price tag seal) that includes a price tag Mt and a two-dimensional code Cr as a set is output, and therefore, the clerk can perform the work for changing the displayed price of the specific product and the work for changing the two-dimensional code Cr at the same time. Accordingly, it is possible to prevent a mistake of changing only the displayed price of the specific product and forgetting to change the two-dimensional code Cr. Therefore, the price of each product of a product group, which is included in the two-dimensional code Cr, can be made always match the displayed price of the product displayed in the product shelf. If such a display medium Ps is used, it is possible to accurately check whether displayed prices of products are correct or not.

### Other Embodiments

The present invention is not limited to the embodiment described above, and may be embodied as described below.

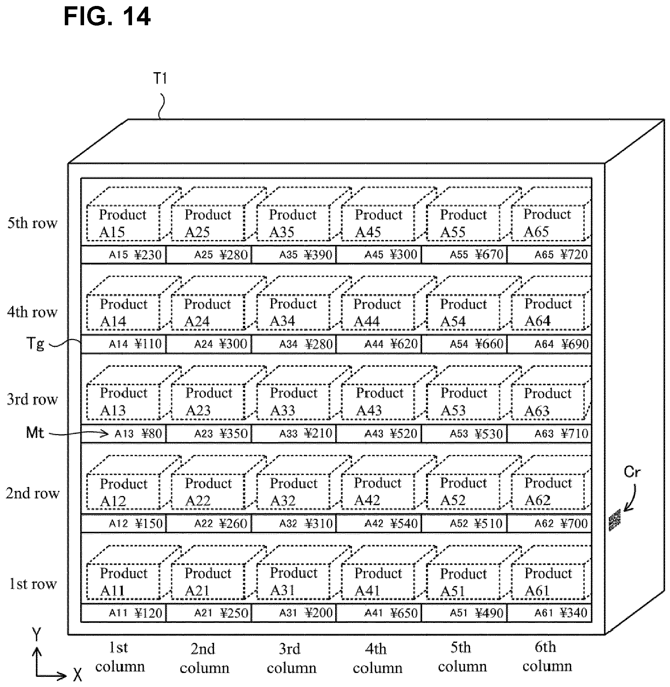

In the embodiment described above, a two-dimensional code Cr is attached to each column in a product shelf (see FIG. 4), but another embodiment is also possible in which a single two-dimensional code Cr is attached to a product shelf. For example, as shown in FIG. 14, a single two-dimensional code Cr may be attached to the product shelf T1. In this case, the two-dimensional code Cr is attached to a side surface of the product shelf T1 at the same height as the height H1 of the camera 27 of the mobile robot 2 (see FIG. 3), for example.

In this case, product IDs of products (30 products) stored in the product shelf T1, information of displayed prices of the products, and a product group ID of a product group including the products are embedded in the two-dimensional code Cr attached to the product shelf T1. The controller 11 of the product management device 1 checks whether the displayed prices are correct or not with respect to each product that is included in the product group and stored in the product shelf T1 based on two-dimensional code information of the single two-dimensional code Cr.

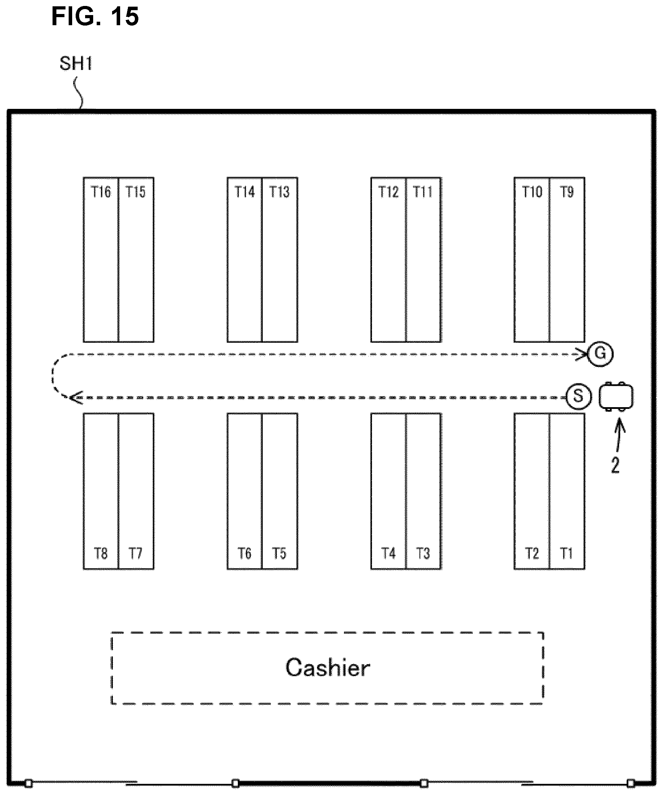

Also, when a two-dimensional code Cr is attached to a side surface of each product shelf installed in the facility SH1 as described above, the mobile robot 2 can read the two-dimensional codes Cr of the product shelves while autonomously moving along a travel route shown in FIG. 15, for example. This makes it possible to shorten the travel route (travel distance) of the mobile robot 2 and consequently shorten the time it takes to check whether displayed prices are correct or not.

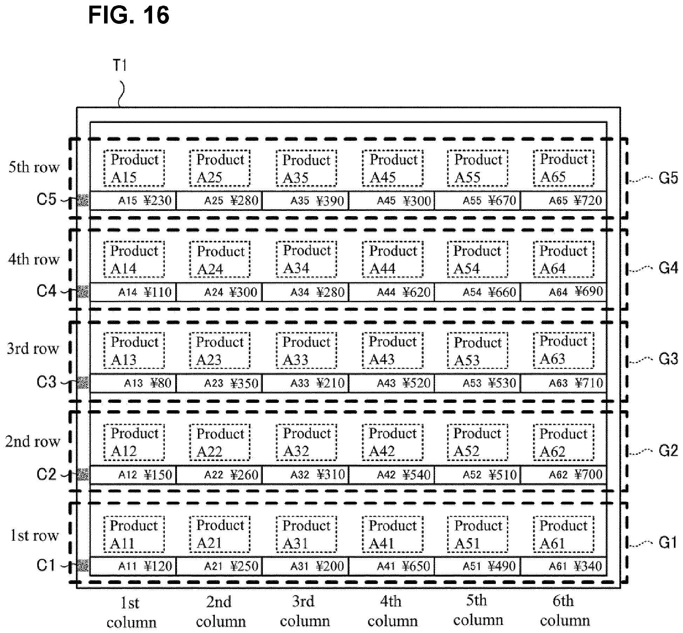

In the embodiment described above, two-dimensional codes Cr are attached in a line in the horizontal direction (X direction) of the product shelf (see FIG. 7), but another embodiment is also possible in which two-dimensional codes Cr are attached in a line in the vertical direction (Y direction) of the product shelf. For example, as shown in FIG. 16, two-dimensional codes Cr may be attached to respective rows arranged in the vertical direction, in an end portion of the product shelf T1. In this case, each product group includes products stored in a row extending in the horizontal direction of the product shelf. In the example shown in FIG. 16, each of product groups G1 to G5 includes a plurality of products stored in the first to the sixth columns in a row of the product shelf T1. This configuration enables the mobile robot 2 to read a plurality of two-dimensional codes Cr in the end portion of the product shelf T1, and accordingly, the travel distance of the mobile robot 2 can be shortened. Therefore, the time it takes to check whether displayed prices are correct or not can be shortened. Note that in the above configuration, the mobile robot 2 may include a mechanism that can move the camera 27 up and down.

In another embodiment, the reading unit in the present invention may be a camera that is installed in the facility SH1. For example, a camera that is installed on the ceiling of the facility SH1 may capture an image of a two-dimensional code Cr attached to a product shelf and output data of the captured image to the product management device 1. In this case, the controller 11 of the product management device 1 can check whether displayed prices are correct or not by acquiring the two-dimensional code information described above based on the image data acquired from the camera. Note that the camera may be an existing monitoring camera installed in the facility SH1.

In another embodiment, the reading unit in the present invention may be a camera that is installed in a portable terminal (e.g., a smartphone) held by the clerk. In this case, the clerk captures an image of a two-dimensional code Cr attached to a product shelf using the camera of the portable terminal of the clerk to check displayed prices. In this case, the portable terminal reads the two-dimensional code Cr and outputs the two-dimensional code information to the product management device 1. This configuration can shorten the time it takes to check displayed prices and can reduce a load of the check work, when compared with a conventional check work in which a clerk checks a displayed price for each product.

In another embodiment, the controller 21 of the mobile robot 2 may execute each processing executed by the controller 11 of the product management device 1. Specifically, the controller 21 of the mobile robot 2 acquires displayed prices of a plurality of products and identification information of a product group including the plurality of products from a reading unit (e.g., the camera 27) that reads an information-readable medium (e.g., a two-dimensional code Cr) that corresponds to the product group and is provided at a predetermined position on a product shelf, and the controller 21 acquires registered prices of the plurality of products associated with the acquired identification information of the product group. Then, if an acquired displayed price of at least one of the plurality of products does not match an acquired registered price of the product, the controller 21 outputs predetermined information. The product information D1 and the product group information D2 may be stored in the storage unit 22 of the mobile robot 2 or an external server (e.g., a cloud server). That is, the product management system according to the present invention may be constituted by only the mobile robot 2.

### LIST OF REFERENCE NUMERALS

- 1: product management device
- 2: mobile robot
- 10: product management system
- 27: camera
- 111: acceptance processing unit
- 112: output processing unit
- 113: acquisition processing unit
- 114: determination processing unit
- 115: notification processing unit
- 211: travel processing unit
- 212: reading processing unit
- 213: output processing unit
- Cr: two-dimensional code

## Claims

1. A product management system (10) comprising:
a first acquisition processing unit (113) configured to acquire displayed prices of a plurality of products and identification information of a product group that includes the plurality of products from a reading unit (27, 212) that reads an information-readable medium (Cr) that corresponds to the product group and is provided at a predetermined position on a product shelf (T1);
a second acquisition processing unit (113) configured to acquire registered prices of the plurality of products associated with the identification information of the product group acquired by the first acquisition processing unit (113); and
a notification processing unit (115) configured to output predetermined information if a displayed price of at least one of the plurality of products acquired by the first acquisition processing unit (113) does not match the corresponding registered price of the product acquired by the second acquisition processing unit (113).

2. The product management system (10) according to claim 1,
wherein the product group includes products that are respectively arranged from bottom to top rows in a column extending in the vertical direction of the product shelf (T1), and
the information-readable medium (Cr) includes the identification information of the product group and currently displayed prices of the plurality of products included in the product group.

3. The product management system (10) according to claim 2,
wherein, in a case where a selling price of a specific product included in the product group is set to a special price that is different from a regular price,
the information-readable medium (Cr) further includes information of an applicable period during which the special price is applicable.

4. The product management system (10) according to any of claims 1 to 3, further comprising:
an output processing unit (112) configured to output a display medium (Ps) that includes a set of the information-readable medium (Cr) and a price tag (Mt) of a displayed price of at least one product included in the product group.

5. The product management system (10) according to any of claims 1 to 4, further comprising:
a mobile device (2) configured to autonomously move in a predetermined area,
wherein, in the mobile device (2), the reading unit (27) is provided at a position at which the reading unit (27) is able to read the information-readable medium (Cr).

6. The product management system (10) according to claim 5,
wherein a plurality of the information-readable mediums (Cr) are respectively provided for columns in the product shelf (T1), and the plurality of information-readable mediums (Cr) are provided at the same height from a floor.

7. The product management system (10) according to claim 6,
wherein the reading unit (27, 212) of the mobile device is configured to sequentially read the information-readable mediums (Cr) respectively provided for the columns in the product shelf (T1) while the mobile device (2) is moving in front of the product shelf (T1).

8. The product management system (10) according to any of claims 1 to 7,
wherein the notification processing unit (115) is configured to output information that urges replacement of the displayed price with the registered price with respect to the product of which the displayed price does not match the registered price.

9. A product management method that is executed by one or more processors, the product management method comprising:
a first acquisition step of acquiring displayed prices of a plurality of products and identification information of a product group that includes the plurality of products from a reading unit (27, 212) that reads an information-readable medium (Cr) that corresponds to the product group and is provided at a predetermined position on a product shelf (T1);
a second acquisition step of acquiring registered prices of the plurality of products associated with the identification information of the product group acquired in the first acquisition step; and
a notification step of outputting predetermined information if a displayed price of at least one of the plurality of products acquired in the first acquisition step does not match the corresponding registered price of the product acquired in the second acquisition step.

10. A product management program for causing one or more processors to execute:
a first acquisition step of acquiring displayed prices of a plurality of products and identification information of a product group that includes the plurality of products from a reading unit (27, 212) that reads an information-readable medium (Cr) that corresponds to the product group and is provided at a predetermined position on a product shelf (T1);
a second acquisition step of acquiring registered prices of the plurality of products associated with the identification information of the product group acquired in the first acquisition step; and
a notification step of outputting predetermined information if a displayed price of at least one of the plurality of products acquired in the first acquisition step does not match the corresponding registered price of the product acquired in the second acquisition step.
